Europäisches Patentamt

European Patent Office

Office européen des brevets

(19)

(11) **EP 0 952 690 A2**

(12) **EUROPÄISCHE PATENTANMELDUNG**

(43) Veröffentlichungstag:
27.10.1999 Patentblatt 1999/43

(51) Int. Cl.$^6$: **H04B 10/105**

(21) Anmeldenummer: 99107743.9

(22) Anmeldetag: 19.04.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 06.05.1998 AT 0097898

(71) Anmelder: OERLIKON CONTRAVES AG
8050 Zürich (CH)

(72) Erfinder:
• Winzer, Peter, Dr.
1210 Wien (AT)
• Kalmar, Andras, Dr.
2324 Rannersdorf (AT)

(74) Vertreter:
Hotz, Klaus, Dipl.-El.-Ing./ETH
c/o OK pat AG,
Patente Marken Lizenzen,
Hinterbergstrasse 36,
Postfach 5254
6330 Cham (CH)

(54) **System zur Bestimmung von Ausrichtungsdaten in optischen Kommunikationsverbindungen**

(57) Das System dient zur Bestimmung von Ausrichtungsdaten in optischen Kommunikationsverbindungen zwischen einem Empfänger und einem sich entfernt von ihm befindenden Sender. Die spontan emittierte Leistung des optischen Vorverstärkers im Empfänger wird als Eingangssignal für die Ausrichtung der Teleskopoptik des Senders und/oder die spontan emittierte Leistung des sendeseitigen optischen Leistungsverstärkers als Eingangssignal für die Ausrichtung des Empfangsteleskops am Empfänger verwendet. Zu diesem Zweck ist ein Filter (11) vorhanden, um die Datensignale (8) von der jeweiligen spontan emittierten Leistung (9) zu trennen, wobei Mittel (12) vorhanden sind, um diese spontan emittierte Leistung als Ausgangssignal zur Ausrichtung eines Teleskops (10) zu verarbeiten.

Fig. 3

EP 0 952 690 A2

**Beschreibung**

Die Erfindung bezieht sich auf ein System zur Bestimmung Von Ausrichtungsdaten in optischen Kommunikationsverbindungen, insbesondere zwischen Satelliten.

Eines der Hauptprobleme bei optischen Kommunikationsverbindungen, beispielsweise zwischen Satelliten (Optical Intersatellite Links, OISLs) ist die exakte Ausrichtung der Sende- und Empfangsteleskope (Pointing, Acquisition, Tracking, PAT) aufeinander [S. Arnon, N. S. Kopeika, Proc. IEEE, 85, 1646-1661, 1997]. Grob erfolgt dies mittels der Bahndaten der Satelliten. Die Bestimmung der Korrekturdaten für eine genaue Ausrichtung (pointing) beziehungsweise eine Nachführung (tracking) wird in bislang veröffentlichten Konzepten entweder mit Hilfe eigener, starker Laserquellen (Beacon-Laser) oder durch Abzweigung eines Teils jener optischen Leistung bewerkstelligt, die das Datensignal überträgt. Nachteilig ist beim erstgenannten Verfahren, dass zusätzliche Komponenten und damit zusätzliche Energie, Masse, Komplexität und Kosten notwendig werden. Weiters ist eine genaue Ausrichtung des Beacon-Teleskops parallel zur optischen Achse des Sende- bzw. Empfangsteleskops erforderlich. Beim zweiten Verfahren, das nur auf der Empfangsseite einsetzbar ist, muss bei sonst gleichbleibenden Systemparametern und gleichbleibender Übertragungsqualität die Leistung des modulierten Datensignals erhöht werden, wodurch man rasch an technologische Grenzen stösst.

Folglich ist es Aufgabe der im folgenden beschriebenen Erfindung, ein neues System dieser Art zu schaffen, das weniger Aufwendig ist.

Diese Aufgabe wird erfindungsgemäss durch ein System mit den im Anspruch 1 angegebenen Merkmalen gelöst. Ein Vorteil des erfindungsgemässen Systems ist, das dieses Verfahren nicht zur Kommunikation zwischen zwei Satelliten, sondern auch für optische Freiraumübertragungssysteme in der Atmosphäre geeignet ist.

Vorteilhafte Ausführungen der Erfindung sind in den abhängigen Ansprüchen angegeben.

Die Erfindung wird nachfolgend beispielsweise an Hand von Zeichnungen näher erläutert. Es zeigen:

Fig. 1   eine schematische Darstellung einer ersten Ausführung eines erfindungsgemässen Systems mit einem Empfänger und einem sich entfernt von ihm befindenden Sender,

Fig. 2   die spektrale Leistungsdichte des Datensignals in einem solchen System,

Fig. 3   eine schematische Darstellung verschiedener Ausführungen des Systems mit einem wellenlängenabhängigen Strahlteiler,

Fig. 4   ein Detail einer weiteren Ausführung des erfindungsgemässen Systems,

Fig. 5   ein Duplexsystem mit einem einzigen Sende/Empfangsteleskop nach der Erfindung, und

Fig. 6   ein erfindungsgemässes Duplex-Systems mit getrennten Sende- und Empfangsteleskopen.

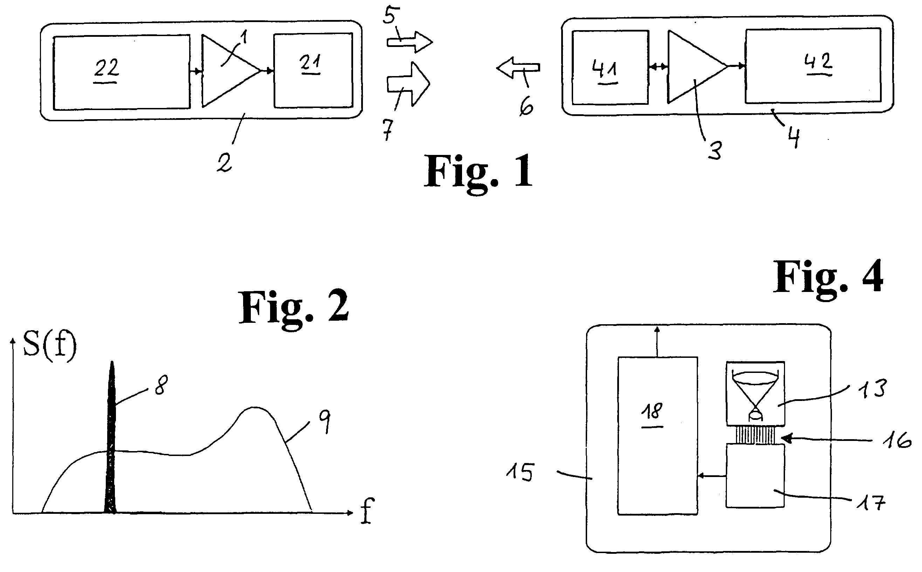

Fig. 1 zeigt einen mit einem optischen Leistungsverstärker 1 versehenen Sender 2 und einen Vorverstärker 3 aufweisenden Empfänger 4. Bei dieser Ausführung wird die vom optischen Leistungsverstärker 1 des Senders 2 und/oder die vom optischen Vorverstärker 3 des Empfängers 4 unvermeidbar ausgesandte spontane Emission 5 und/oder 6 zu PAT-Zwecken verwendet, dass heisst die sogenannte verstärkte spontane Emission (amplified spontaneous emission, ASE), die zusätzlich zum Datensignal 7 stets vorhanden ist. Dadurch muss weder separate Energie und Hardware und damit auch Masse, Komplexität und Kosten für Beacon-Laser vorgesehen werden, noch muss Leistung vom am Empfänger ohnehin sehr schwachen Datensignal 7 zu PAT-Zwecken im Empfänger 4 abgezweigt werden. Die aufwendige Justierung des Beacon-Teleskops parallel zum Sende- bzw. Empfangsteleskop entfällt ebenfalls. Der Sender 2 umfasst selbstverständlich eine Teleskopoptik 21 und eine Anordnung 22 zur Erzeugung des optischen Nachrichtensignals und der Empfänger dementsprechend ebenfalls eine Teleskopoptik 41 und eine Anordnung 42 für die Verarbeitung des optischen Empfangssignals.

Da im Gegensatz zu terrestrischen Glasfasernetzen für optische Kommunikation bei optischen Freiraumverbindungen an die Verwendung von Zwischenverstärkern naturgemäss nicht zu denken ist, muss die optische Sendeleistung allein ausreichen, um die Verbindung bei einer geforderten Bitfehlerwahrscheinlichkeit zustande zu bringen. Eine Möglichkeit, die aus diesem Grunde hohe erforderliche Sendeleistung zu erzeugen, ist die senderseitige optische Verstärkung des modulierten Lichts von Lasern mit niedrigen Ausgangsleistungen. Die Existenz ausgereifter optischer Wanderwellenverstärker, beispielsweise Erbium-dotierte Faserverstärker für eine Wellenlänge von l,55μm, EDFAs [J. C. Livas et al.. Proc. SPIE Vol. 2381, 38-47, 1995], kommt der vorliegenden Erfindung zugute, sowie auch die zur Erhöhung der Empfindlichkeit des Empfängers verwendeten optischen Vorverstärker [J. C. Livas et al., Proc. SPIE Vol. 2381, 38-47, 1995].

**Figur 2** zeigt die spektrale Leistungsdichte S(f) 8 des Datensignals 7 sowie die spektrale Leistungsdichte der verstärkten spontanen Emission $N_{ASE}$ 9 des optischen Leistungsverstärkers 1 am Eingang des Empfängers 4. Gleichermassen stellt 9 die spektrale Leistungsdichte der vom optischen Vorverstärker **3** abgestrahlten spontanen Emission **6** dar, welche auch am Ausgang des Senders **2** anzutreffen ist.

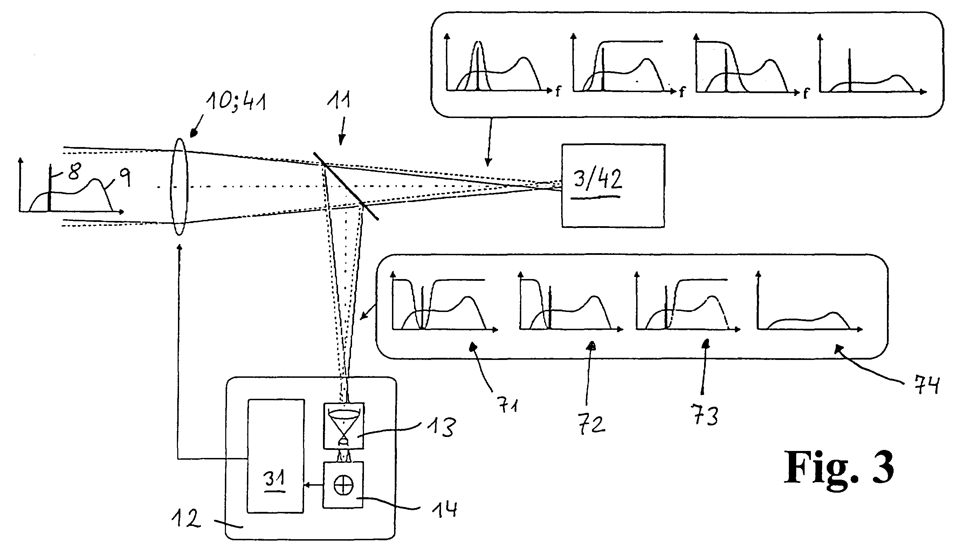

**Figur 3** zeigt eine mögliche Systemrealisierung, die unter anderem eine Teleskopoptik **10**, einen wellenlängenabhängigen oder polarisationsabhängigen Strahlteiler **11** und ein PAT-System **12** beinhaltet, welches als Komponenten beispielsweise ein winkelvergrösserndes optisches System **13**, einen 4-Quadranten-Detektor **14** und eine Regelelektronik **31** für die Teleskopausrichtung beinhalten kann. Die Trennung von Datensignal und PAT-Signal kann nicht nur über die Wellenlänge sondern auch über die Polarisation erfolgen. Da die Wellenlänge umgekehrt proportional zur Frequenz ist, sind in diesem Zusammenhang die Begriffe "wellenlängenabhängig" oder "frequenzabhängig" gleichbedeutend. In beiden Fällen wird ein Strahlteiler eingesetzt, der in Abhängigkeit der Polarisation oder der Wellenlänge das Licht durchlässt oder reflektiert. Die ASE-Leistung ist spektral um Grössenordnungen breiter als das Datensignal, so dass eine Trennung über die Wellenlänge leicht möglich ist. Weiters ist das Datensignal typischerweise in einer einzigen Polarisation vorhanden, während die ASE-Leistung beide orthogonalen Polarisationen besetzt. Dies macht eine Trennung über die Polarisation leicht möglich.

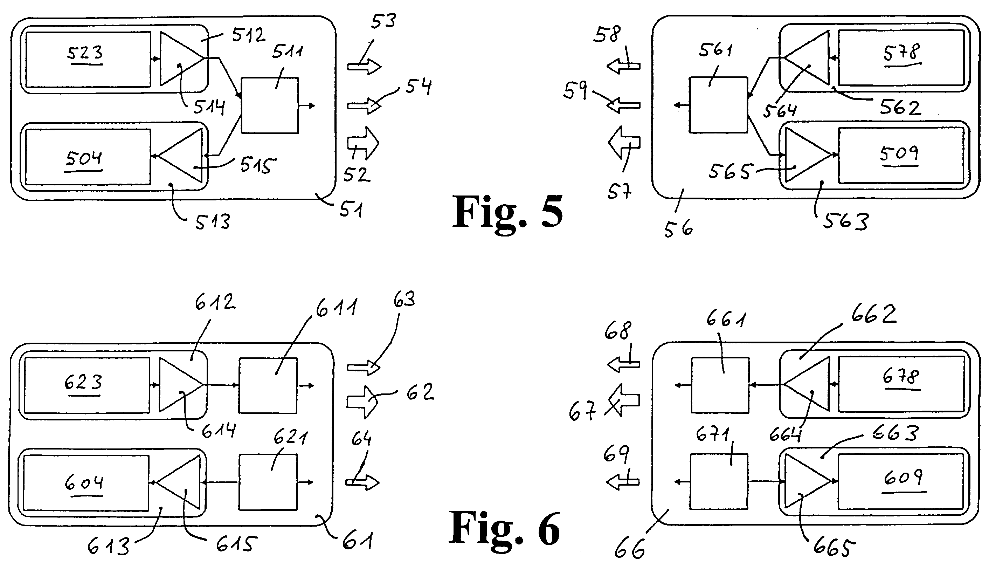

**Fig. 4** zeigt eine modifizierte Version des PAT-Systems **15**, welche neben den Komponenten aus **Fig. 3** noch ein Wellenleiterbündel, beispielsweise ein Monomode-Glasfaserbündel **16** und ein CCD-Element (charge-coupled device) **17** enthält, das an eine Regelelektronik **18** für die Teleskopausrichtung angeschlossen ist.

Neben dem gewünschten, bezüglich des Eingangs verstärkten Ausgangssignal emittieren optische Wanderwellenverstärker ein Hintergrundlicht , das heisst die erwähnte verstärkte spontane Emission (amplified spontaneous emission, ASE), das zwei für das Verständnis des Erfindungsgegenstandes wichtige Eigenschaften besitzt:

1. Die ASE-Leistung **5**, **6**, **9** ist spektral um Grössenordnungen breiter als das Datensignal **7** (**Fig. 1**) oder **8** (**Fig. 3**). Die spektrale Leistungsdichte $N_{ASE}$ **9** beträgt pro räumlichen Modus

$$N_{ASE} = hf(G-1)n_{sp}, \qquad (A)$$

wobei hf die Energie eines Photons bei der betrachteten Frequenz, G die (Leistungs)-Verstärkung des optischen Verstärkers und $n_{sp}$ der (frequenzabhängige) spontane Emissionfaktor ist. Bei heutzutage erhältlichen Hochleistungs-EDFAs etwa liegt $n_{sp}$ zwischen 1 und 3.2. Aufgrund der Breitbandigkeit der ASE-Leistung **5**, **6**, **9** im Vergleich zum Datensignal **7**, **8** kann eine fast vollständige spektrale Trennung von empfangenem Datensignal **7** und ASE-Leistung **5**, **6** mit Hilfe von wellenlängenabhängigen Strahlteilern **11** vorgenommen werden; dadurch steht die gesamte Leistung des Datensignals für die Datenübertragung zur Verfügung, während die ASE-Leistung **9** (**Fig. 2**) oder Teile davon zum PAT-System herangezogen werden können. Nach der Erfindung ist auch eine Trennung des Signals von der ASE-Leistung über die Polarisationseigenschaften der beiden optischen Felder möglich. Ähnliche Verhältnisse gelten für die ASE-Leistung des Empfängers am zugeordneten Sender.

2. Die ASE-Leistung ist, falls keine entsprechende räumliche Filterung vorgenommen wird, in allen räumlichen Moden des optischen Systems anzutreffen, so dass Gleichung (A) im allgemeinen noch mit der Anzahl der vorhandenen Moden multipliziert werden muss. In der Praxis eines OISLs liegt jedoch die Anzahl der tatsächlich emittierten Moden sowohl der Sender-ASE-Leistung **5** als auch der Empfänger-ASE-Leistung **6** zwischen 1 und 2, da sowohl die Teleskopoptik des Senders **2** als auch die des Empfängers **4** möglichst beugungsbegrenzt realisiert werden.

Da die ASE-Leistung dieselben räumlichen Moden wie das Datensignal besetzt, gelten für beide dieselben Ausbreitungsbedingungen. Die fehlende zeitliche Kohärenz der ASE-Leistung spielt hierfür keine Rolle. Es kann daher in einfacher Weise eine erste Abschätzung der ASE-Leistung des Senders am Empfänger gemacht werden. Analoge Überlegungen gelten für die Abschätzung des Empfänger-Vorverstärker-ASE-Leistung am Sender. Bezeichnet man mit $D_{TX}$ und $D_{RX}$ die Teleskopdurchmesser von Sender und Empfänger, mit R die gegenüber dem Teleskopdurchmesser grosse Kommunikationsdistanz und mit $\lambda$ die Wellenlänge des Senders, kann man den Bruchteil der vom Sender in das Empfangssystem eingekoppelten ASE-Leistungsdichte mit

$$N_{ASE,RX} \approx [D_{RX}D_{TX}/R\lambda]^2 hf(G-1)n_{sp} \qquad (B)$$

abschätzen. Für die realistischen Annahmen eines senderseitigen Erbium-dotierten Leistungsverstärkers ($\lambda=1.55\mu m$) mit G=45dB und einer Rauschzahl von F=6dB, eines Sende- sowie Empfangsteleskopdurchmessers von 10 cm und einer Übertragungsdistanz von beispielsweise 6000 km ergibt sich $N_{ASE,RX}$ zu $9.3 \cdot 10^{-21}$ W/Hz. Nimmt man für das PAT-System eine optische Bandbreite von 20 nm an (die gesamte Verstärkungsbandbreite eines EDFAs beträgt etwa 30 nm), so erhält man eine Leistung von $2.4 \cdot 10^{-8}$ W (=-46dBm) für PAT-Zwecke, was im Vergleich mit anderen Systemen ausreichend scheint [R. Cockshott, D. Purll, Proc. SPIE Vol. 2381, 206-214, 1995].

**Figur 3** zeigt eine mögliche Realisierung des Systems für den Fall der Nutzung der Sender-ASE-Leistung am Empfänger eines OISLs. Die einfallende optische Welle wird von einer Teleskopoptik **10** fokussiert. Mittels eines allgemein bekannten frequenzabhängigen Strahlteilers **11**, wie in **Figur 3** angedeutet, mit Bandpass-/Bandsperrencharakteristik oder auch mit Tief-/Hochpasscharakteristik [N. Kashima, Passive Optical Components for Optical Fiber Transmission, Artech House, Boston, 1995] wird der Grossteil der ASE-Leistung abgezweigt, wie die schematische Darstellung der Spektren in **Figur 3** zeigt. Über ein winkelvergrösserndes optisches System **13**, beispielsweise ein Fernrohr, welches der Erhöhung der Winkelauflösung des PAT-Systems **12** dient, kann diese Leistung beispielsweise auf einen 4-Quadranten-Detektor **14** gemäss dem Stand der Technik geleitet werden, wobei auch ein CCD-Sensor bzw. diskrete Photodetektoren einsetzbar sind. Aus den Ausgangssignalen des 4-Quadranten-Detektors werden die Steuersignale für die Ausrichtung der Teleskopoptik **10** beziehungsweise für deren Nachführung gewonnen [W. Auer, SPIE Milestone Series Vol. MS 100 (D. Begley ed.), 276-280, 1994 und D. M. Southwood, Proc. SPIE Vol. 1635, 286-299, 1992].

Bemerkenswert ist auch, dass das erfindungsgemässe PAT-System mit kleinen Modifikationen auch bei starkem Hintergrundlicht einsetzbar ist. Die Hintergrundstrahlung der Venus beträgt beispielsweise etwa $4 \cdot 10^{-25}$ W/Hz pro räumlichen Modus, die der Sonne etwa $4 \cdot 10^{-20}$ W/Hz pro räumlichen Modus [W.R. Leeb, Applied Optics 28, 3443-3449, 1989]. Da diese Quellen gleichzeitig in vielen Moden emittieren, ist die gesamte Hintergrundstrahlung grösser als die ASE-Leistung und würde das PAT-System beeinträchtigen. Abhilfe schafft in diesem Fall die Verwendung eines Modenfilters, das die empfangene Strahlung auf einen Modus begrenzt. Die für PAT-Zwecke empfangene ASE-Leistung wird dadurch nur unwesentlich abgeschwächt, da die ASE-Leistung - wie schon oben erwähnt - ohnehin nur 1 bis 2 räumliche Moden besetzt. Die vielmodige Hintergrundstrahlung wird jedoch stark gedämpft und liegt nach dieser Realisierung leistungsmässig unter der ASE-Leistung.

**Fig. 4** zeigt eine mögliche Realisierung des in diesem Fall zu verwendenden Verarbeitungssystems der ASE-Leistung: Anstelle der direkten Beleuchtung eines 4-Quadranten-Detektors wird ein Monomode-Wellenleiterbündel oder Glasfaserbündel **16** in Kombination mit z.B. einem CCD-Element **17** verwendet. Dieses Glasfaserbündel **16**, das beispielsweise eine integrierte Optik oder ein Glasfaserbündel sein kann, ist zwischen der winkelvergrössernden Optik und dem Detektor eingefügt und arbeitet als Modenfilter. Durch die Kopplung in Monomodefasern wird die vielmodige Hintergrundstrahlung auf einen Modus begrenzt und liegt dadurch leistungsmässig unter der in den Empfänger eingekoppelten ASE-Leistung des Senders, die, wie oben erwähnt, ohnehin nur 1 bis 2 räumliche Moden besetzt und daher im Vergleich zur Hintergrundstrahlung bei der Einkopplung nur schwach gedämpft wird. In **Fig. 4** ist als Detektor ein CCD-Element dargestellt, wobei auch ein 4-Quadranten-Detektor, ein focal plane array oder diskrete Photodioden eingesetzt werden können. Das Modenfilter muss nicht notwendigerweise in Glasfasertechnologie hergestellt sein, da jede andere Art von optischen Wellenleitern, beispielsweise in integrierter Optik, auch dafür geeignet ist.

Charakteristisch für das erfindungsgemässe System zur Bestimmung von Ausrichtungsdaten in einem optischen Freiraumübertragungssystem, bei dem das Sende- bzw. Empfangsteleskop mittels der ASE-Leistung ausgerichtet bzw. nachgeführt wird, ist daher das Vorhandensein von optischen Wandlerwellenverstärkern im Sender und/oder im Empfänger. So können beispielsweise Erbium-dotierte Faserverstärker, EDFA, im Wellenlängenbereich 1,55 µm, Nd- bzw. Pr-dotierte Faserverstärker bei einer Wellenlänge von 1,3 µm oder DC-NDFA bei 1,06 µm oder jeder andere optische Wandlerwellenverstärker eingesetzt werden. Falls ein solcher Verstärker vorhanden ist, können die Ausrichtungsdaten für das jeweils gegenüberliegende Teleskop mittels der vom Wandlerwellenverstärker ausgesandten ASE-Leistung gewonnen werden.

Das Duplex-System nach **Fig. 5** weist zwei Terminals **51** und **56** mit je einer Teleskopoptik **511** bzw. **561** auf, an die jeweils eine Sender-Einheit **512** bzw. **562** und eine Empfänger-Einheit **513** bzw. **563** angeschlossen sind, wobei die zwei optischen NachrichtensendeEinheiten **512** und **562** mit je einem optischen Verstärker **514** bzw. **564** und/oder die zwei optischen Nachrichtenempfänger-Einheiten **513** und **563** mit je einem optischen Vorverstärker **515** bzw. **565** versehen sind. Gemäss der vorliegenden Erfindung wird daher nicht nur das Sendesignal **52** von der Teleskopoptik **511** des Terminals **51** und das Sendesignal **57** der Teleskopoptik **561** des Terminals **56** ausgesendet, sondern auch eine ASE-Leistung **53** des optischen Sendeverstärkers **514** und/oder eine ASE-Leistung **54** des optischen Vorverstärkers **515** des Terminals **51** sowie eine ASE-Leistung **58** des optischen Sendeverstärkers **564** und eine ASE-Leistung **59** des optischen Vorverstärkers **565** des Terminals **56** ausgesendet.

Das Duplex-System nach **Fig. 6** weist zwei Terminals **61** und **66** mit je einer Sender-Teleskopoptik **611** bzw. **661** und einer Empfänger-Teleskopoptik **621** bzw. **671** auf. An die Sender-Teleskopoptik **611** bzw. **661** ist jeweils eine Sender-Einheit **612** bzw. **662** und an die Empfänger-Teleskopoptik **621** bzw. **671** eine Empfänger-Einheit **613** bzw. **663** angeschlossen, wobei die zwei optischen Nachrichtensender-Einheiten **612** und **662** mit je einem optischen Verstärker **614** und **664** und die zwei optischen Nachrichtenempfänger-Einheiten **613** und **663** mit je einem optischen Vorverstärker **615** bzw. **665** versehen sind. Gemäss der vorliegenden Erfindung werden daher nicht nur das Sendesignal **62** von der Teleskopoptik **611** des Terminals **61** und das Sendesignal **67** der Teleskopoptik **661** des Terminals **66** ausgesendet, sondern auch eine ASE-Leistung **63** des optischen Sendeverstärkers **614** des Terminals **61** und eine ASE-Leistung **64** des optischen Vorverstärkers **615** und/oder eine ASE-Leistung **68** des Sendeverstärkers **664** und eine ASE-Leistung **69** des Vorverstärkers **665** des Terminals **66** ausgesendet.

In den **Figuren 5** und **6** sind die Anordnungen **523** und **623** als Sender für ein optisches Nachrichtensignal A, die Anordnungen **578** und **678** als Sender für ein optisches Nachrichtensignal B, die Anordnungen **504** und **604** als Empfänger für ein optisches Datensigal B und die Anordnungen **509** und **609** als Empfänger für ein optisches Datensigal A vorgesehen.

Da in den Terminals **51, 56** (**Fig. 5**) und **61, 66** (**Fig. 6**) solche optischen Verstärker bzw. Vorverstärker vorhanden sind, können die Ausrichtungsdaten für das jeweils gegenüberliegende Teleskop mittels der vom Wanderwellenverstärker ausgesandten ASE-Leistung gewonnen werden, das heisst, bei Vorhandensein eines der Verstärker **514** oder **515** bzw. **564** bzw. **614** oder **615** können die Ausrichtungsdaten für das Empfangsteleskop **561** bzw. **661** und **671** im Gegenterminal gewonnen werden, und bei Vorhandensein eines der Verstärker **564** oder **565** bzw. **664** oder **665** können die Ausrichtungsdaten für das Sendeteleskop **511** bzw. **611** und **621** im Gegenterminal gewonnen werden.

Wichtig ist in all diesen Fällen, dass die ASE-Leistung des optischen Wellenwandlerverstärkers nicht durch technische Massnahmen unterdrückt, beispielsweise gefiltert wird, so dass sie tatsächlich vom Sender bzw. vom Empfänger abgestrahlt wird, wie es weiter oben an Hand der **Figuren 5** und **6** erläutert wurde. In **Fig. 5** wird ein System dargestellt, in dem Sender und Empfänger ein und dasselbe Teleskop **511** bzw. **561** benutzen. Demgegenüber zeigt **Fig. 6** ein System, in dem Sender und Empfänger getrennte Teleskope **611**, **621** bzw. **661, 671** benutzen. Diese Systeme unterscheiden sich von dem Simplexsystem nach **Fig. 1**, bei dem nur in einer Richtung eine optische Datenübertragung stattfindet. Falls die ASE-Leistung für PAT-Zwecke verwendet wird, ist in all diesen Fällen kein zusätzliches Teleskop für das Aussenden bzw. Empfangen des Nachführsignals erforderlich, und zwar im Unterschied zu herkömmlichen Systemen mit Beacon-Laser, in denen oft eigene Teleskope dafür vorhanden sind. Falls in den Kommunikationsterminals jeweils nur ein optischer Verstärker eingesetzt wird, entweder ein Sendeverstärker oder ein Vorverstärker, können in einem Duplexsystem (**Fig. 5** und **6**) noch immer beide Terminals mittels der ASE-Leistung ausgerichtet werden, da sich an jedem Ende der Übertragungsstrecke zumindest noch ein Verstärker befindet, der eine ASE-Leistung aussendet. In einem Simplexsystem hingegen kann bei Wegfall eines Verstärkers nur eines der Kommunikationsterminals mittels der ASE-Leistung ausgerichtet werden.

**Fig. 3** zeigt auch andere mögliche Systemrealisierungen, wobei gemäss der ersten Variante **71** der Strahlteiler eine Bandpass-/Bandsperrencharakteristik aufweist, derart, dass ein schmaler Frequenzbereich um das Datensignal durchgelassen und die restliche ASE-Leistung reflektiert wird. Bei den weiteren Varianten **72** und **73** wird ein Strahlteiler mit Hochpass-/Tiefpasscharakteristik verwendet, derart, dass entweder gemäss der einen Variante **72** der Bereich niedriger Frequenzen reflektiert und der Rest durchgelassen wird oder gemäss Variante **73** umgekehrt, weil derartige Strahlteiler einfacher zu realisieren sind, wobei aber die für PAT-Zwecke vorhandene Leistung auch kleiner als bei der Variante **71** ist. Die vierte Variante bezieht sich auf die Verwendung eines polarisationsabhängigen Strahlteilers. Dabei wird der Effekt ausgenutzt, dass das Datensignal üblicherweise nur einen Polarisationszustand einnimmt, die ASE-Leistung jedoch gleichmässig über beide möglichen Polarisationszustände verteilt ist. Mit einem polaristionsabhängigen Strahlteiler kann man daher die Hälfte der ASE-Leistung vom Datensignal und von der anderen Hälfte der ASE-Leistung trennen.

## Patentansprüche

1. System zur Bestimmung von Ausrichtungsdaten in optischen Kommunikationsverbindungen zwischen einem Empfänger (**4**) und einem sich entfernt von ihm befindenden Sender (**2**), der mit einem optischen Leistungsverstärker (**1**) versehen ist, und wobei der Empfänger (**4**) eine Teleskopoptik (**41**) aufweist,
*dadurch gekennzeichnet, dass*
die spontan emittierte Leistung (**5**) des sendeseitigen optischen Leistungsverstärkers (**1**) als Eingangssignal für die Ausrichtung der Teleskopoptik (**41**; **10**) des Empfängers (**4**) verwendet wird.

2. System zur Bestimmung von Ausrichtungsdaten in optischen Kommunikationsverbindungen zwischen einem Empfänger (**4**) und einem sich entfernt von ihm befindenden Sender (**2**), der mit einer Teleskopoptik (**21**) versehen ist, und wobei der Empfänger (**4**) einen optischen Vorverstärker (**3**) aufweist,
*dadurch gekennzeichnet, dass*
die spontan emittierte Leistung (**6**) des optischen Vorverstärkers (**3**) im Empfänger (**4**) als Eingangssignal für die Ausrichtung der Teleskopoptik (**21**) des Senders (**2**) verwendet wird.

3. System zur Bestimmung von Ausrichtungsdaten in optischen Kommunikationsverbindungen zwischen einem Empfänger (**56**; **66**) und einem sich entfernt von ihm befindenden Sender (**51**; **61**), wobei der Sender mit einem optischen Leistungsverstärker und einer Teleskopoptik und/oder der Empfänger mit einer Teleskopoptik und einem optischen Vorverstärker versehen ist,
*dadurch gekennzeichnet, dass*
die spontan emittierte Leistung (**59**; **69**) des optischen Vorverstärkers (565; 665) im Empfänger (56; 66) als Eingangssignal für die Ausrichtung der Teleskopoptik (511; 611; 621) des Senders (51; 61) und/oder die spontan emittierte Leistung (53; 63) des sendeseitigen optischen Leistungsverstärkers (514; 614) als Eingangssignal für die Ausrichtung des Empfangsteleskops (561; 661; 671) am Empfänger (56; 66) verwendet wird.

4. System nach einem der Ansprüche 1 bis 3,
   **dadurch gekennzeichnet, dass**
   ein Filter (11) vorhanden ist, um die Datensignale (8) von der jeweiligen spontan emittierten Leistung zu trennen, und dass Mittel (13, 14, 31; 13, 16, 17, 18) vorhanden sind, um diese spontan emittierte Leistung als Ausgangssignal zur Ausrichtung eines Teleskops (10) zu verarbeiten.

5. System nach Anspruch 4,
   **dadurch gekennzeichnet, dass**
   dieser Filter (11) ein wellenabhängiger Strahlteiler oder ein Polarisationsfilter ist.

6. System nach Anspruch 4 oder 5,
   **dadurch gekennzeichnet, dass**
   eine PAT-Einrichtung (**P**ointing, **A**cquisition, **T**racking) (12) mit einem winkelvergrössernden optischen System (13) vorhanden ist, um die über dieses Filter (11) ausgefilterte sich aus der spontan emittierten Leistung (5) der Gegenseite ergebende Leistung zu empfangen, und dass die PAT-Einrichtung (12) einen Detektor (14; 17) und eine Regelelektronik (31; 18) zur Verarbeitung dieser ausgefilterten Leistung umfasst.

7. System nach Anspruch 6,
   **dadurch gekennzeichnet, dass**
   dieser Detektor ein 4-Quadranten-Detektor (14) oder ein CCD-Detektor (**c**harge-**c**oupled **d**evice) (17) ist.

8. System nach Anspruch 6,
   **dadurch gekennzeichnet, dass**
   als Detektor ein focal plane array oder diskrete Photodioden eingesetzt werden.

9. System nach einem der Ansprüche 1 bis 8,
   **dadurch gekennzeichnet, dass**
   im Sender ein optischer Wanderwellen-Verstärker, beispielsweise ein optischer Halbleiterverstärker, ein Erbium-dotierter Faserverstärker oder ein Nd- oder Pr-dotierter Faserverstärker vorhanden ist.

10. System nach einem der Ansprüche 1 bis 9,
    **dadurch gekennzeichnet, dass**
    zur Unterdrückung von störendem Hintergrundlicht eine räumliche Filterung mittels optischer Monomode-Wellenleiter (6) erfolgt.

**Fig. 1**

**Fig. 2**

**Fig. 4**

Fig. 3

**Fig. 5**

**Fig. 6**